# EUROPEAN PATENT APPLICATION

(11) **EP 4 691 752 A1**
(43) Date of publication of application: **11.02.2026**
(21) Application number: 25194472.4
(22) Date of filing: 06.08.2025
(51) Int. Cl.: B32B 3/02, B32B 3/06, B32B 5/18, B32B 5/24, B32B 7/022, B32B 27/06

(54) **MODULAR PAD**

(30) Priority: 06.08.2024 TW 113129447
(71) Applicant: Kuo, Chun-Fu, 42950 Taichung City (TW)
(72) Inventor: Kuo, Chun-Fu, 42950 Taichung City (TW)
(74) Representative: Lang, Christian

(57) **Abstract**

A modular pad (1) is provided, the modular pad (1) includes a main body layer, the main body layer (10) includes a top surface (11), a bottom surface (12), a first side (13) and a second side (14), the first side (13) includes a first surface (131) and a second surface (132), the first surface (131) extends from the top surface (11) toward the bottom surface (12), the second surface (132) is obliquely connected between the bottom surface (12) and the first surface (131), the first side (13) surface is configured to be engaged with a second side (14) surface of another modular pad (1) which has a shape complementary to a shape of the first surface (131) in parallel.

## Description

### BACKGROUND OF THE INVENTION

### Field of the Invention

The present invention relates to a pad, particularly to a modular pad.

### Description of the Prior Art

Pads are widely used in various fields (such as playroom environments, sports environments, work environments, etc.) and for different needs (such as shock absorption, cushioning, sound insulation, etc.). Since these environments usually cover a large area, modular pads have been developed that can be pieced together according to the size of the area to be covered, which is convenient, quick and economic to use.

Conventional modular pads have sides which include male protrusions and female protrusions. These protrusions allow pads to be engaged. However, the conventional modular pads have only vertical sides, making it easy for the overall surface to become uneven due to an uneven laying surface or varying depths of vertical engaged. Moreover, since the edges of the pads are independently aligned in the vertical direction, they cannot provide mutual support, which can cause the engaged edges to easily become depressed and permanently deformed.

The present invention is, therefore, arisen to obviate or at least mitigate the above-mentioned disadvantages.

### SUMMARY OF THE INVENTION

The main object of the present invention is to provide a modular pad which can be quickly and accurately engaged so that it ensures the flatness of the surface after engaged, and provides good support to effectively prevent the engaged edges from being depressed and permanently deformed, and is easy and quick to process.

To achieve the above and other objects, a modular pad is provided, wherein the modular pad includes: two main body layers, each of the two main body layers including a top surface, a bottom surface, a first side straightly extending for an entire length between opposing distal edges of the main body layer, and a second side which has a shape complementary to a shape of the first side in parallel, the first side including a first surface and a second surface, the first surface extending from the top surface toward the bottom surface, the second surface obliquely extending from the bottom surface and being obliquely connected to the first surface, the first side of one of the two main body layers being engaged with the second side of the other of the two main body layers in parallel, the top surfaces of the two main body layers being located at a same side of the modular pad; wherein the first surface and the second surface of the first side form a convex corner portion, the second side includes a concave corner portion, and the convex corner portion of one of the two main body layers and the concave corner portion of the other of the two main body layers are fittingly engaged with each other.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a perspective view of an embodiment of the present invention;
Fig. 2 is a schematic view of engagement of an embodiment of the present invention;
Fig. 3 is a cross-sectional view of an embodiment of the present invention;
Fig. 4 is an enlarged partial view of Fig. 3; and
Fig. 5 is an enlarged view of another embodiment of the present invention.

### DETAILED DESCRIPTION OF THE PREFERRED EMBODIMENTS

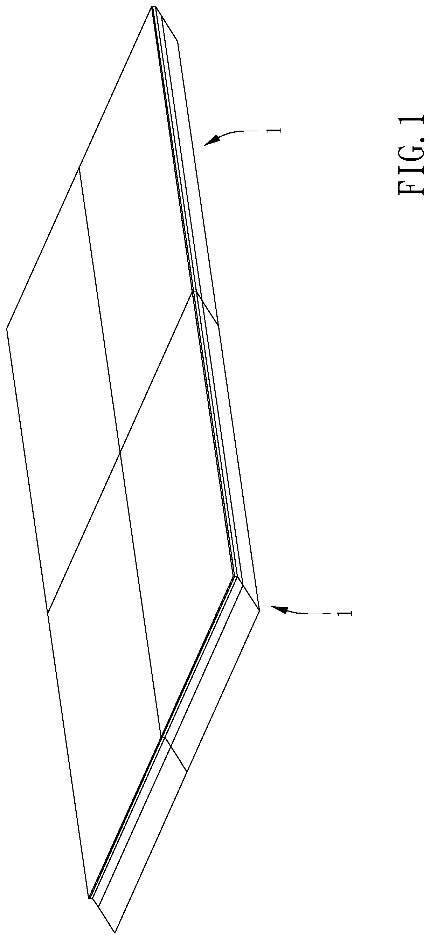

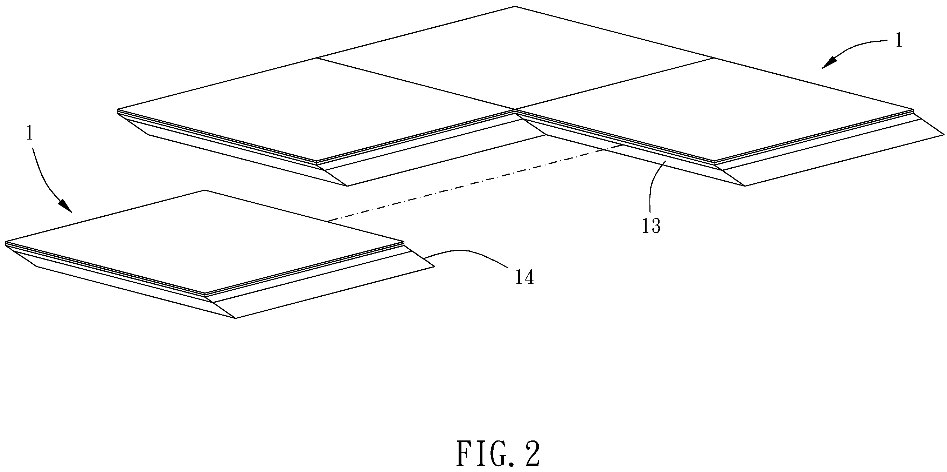

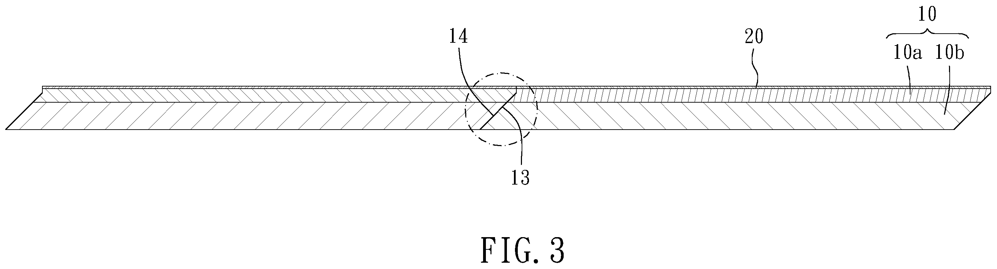

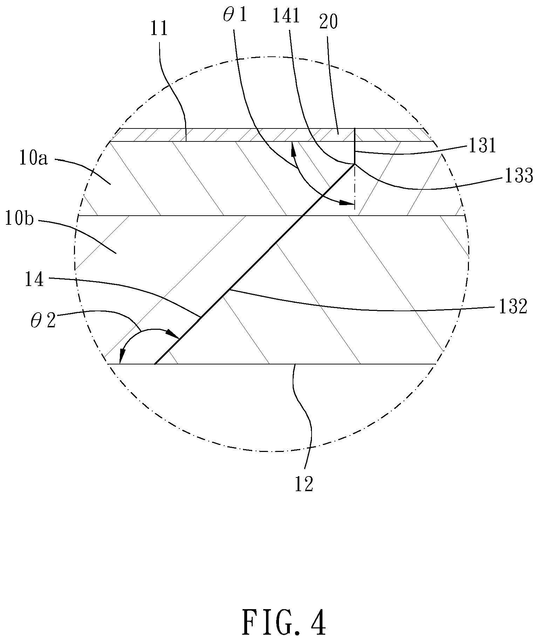

Please refer to Figs. 1 to 4 for an exemplary embodiment of the present invention. A modular pad 1 of the present invention includes two main body layers 10, and each of the two main body layers 10 includes a top surface 11, a bottom surface 12, a first side 13 straightly extending for an entire length between opposing distal edges of the main body layer 10, and a second side 14 which has a shape complementary to a shape of the first side 13 in parallel. The first side 13 includes a first surface 131 and a second surface 132, the first surface 131 extends from the top surface 11 toward the bottom surface 12, and the second surface 132 obliquely extends from the bottom surface 12 and is obliquely connected to the bottom surface 12 and the first surface 131. The first side 13 of one of the two main body layers is engaged with the second side 14 of the other of the two main body layers 10 in parallel, and the top surfaces 11 of the two main body layers 10 are located at a same side of the modular pad 1. The two main body layers 10 may have mutually parallel and complementary first surface 131 and second surface 132 on two opposing sides, or may have mutually parallel and complementary first surface 131 and second surface 132 on two pairs of opposing sides, respectively, for longitudinal and transverse engagement. However, the two main body layers 10 may be of any of other shapes, for example, including more than four sides.

Because of inclined and stepped side structures, the the main body layer 10 can be quickly and accurately engaged, ensuring the flatness of the surface after engaged, and providing good support to effectively prevent the engaged edges from being depressed and permanently deformed. Furthermore, the first side 13 of one of the two main body layers 10 and the second side 14 of the other of the two main body layers 10 may be simultaneously formed by a single tool cut along a direction parallel to the first side 13, where the blade of the tool preferably extends in the same and parallel direction as the first side 13. Cutting methods may include vibrating cutting, hot melting cutting or laser cutting. Thus, a single cut of a raw material sheet can simultaneously obtain two sides of two modular pads that are mutually parallel and complementary in shape, without the need for plural tool cuts, flipping or moving the raw material sheet, or destroying or removing part of the raw material sheet, and thus it makes the process simple, fast, material-saving, structurally complete and dimensionally accurate.

The main body layer 10 further includes at least one flexible layer, and the at least one flexible layer may be a foamed structure made of rubber, plastic or silicone material, depending on different functionalities or needs (such as shock absorption, sound insulation, cushioning, etc.). In this embodiment, the main body layer 10 includes a plurality of flexible layers. The at least one flexible layer includes a first flexible layer 10a and a second flexible layer 10b, the first flexible layer 10a includes the top surface 11, the second flexible layer 10b is adjacent to the first flexible layer 10a and includes the bottom surface 12. Optionally, at least one of the first flexible layer 10a and the second flexible layer 10b may be a multilayer structure. The first flexible layer 10a and the second flexible layer 10b may be made of the same or different materials, have the same or different densities, and/or have the same or different hardness. In this embodiment, the first flexible layer 10a is a monolayer structure.

In this embodiment, at least two of the plurality of flexible layers have different hardness. For example, the hardness of the first flexible layer 10a is greater than the hardness of the second flexible layer 10b, which provides better support and reduces the issue of depression deformation of the modular pad 1. Preferably, the uppermost layer of the main body layer 10 has greater hardness than the adjacent flexible layer, and the second surface 132 extends from the bottom surface 12 to within the range of the first flexible layer 10a. As a result, the engaged position of the main body layer 10 is located in the flexible layer with greater hardness, thus significantly improving engaged accuracy and support capacity, and providing better resistance to depression deformation in both vertical and horizontal directions.

Furthermore, the first surface 131 and the second surface 132 of one of the two main body layers 10 form a convex corner portion 133, and the second side 14 of the other of the two main body layers 10 forms a concave corner portion 141. The convex corner portion 133 and the concave corner portion 141 are fittingly engaged with each other, which allows for quick and accurate installation and engagement. The convex corner portion 133 and the concave corner portion 141 are adjacent to the top surface 11, and the convex corner portion 133 is located within the first flexible layer 10a which is a monolayer structure. The convex corner portion 133 and the concave corner portion 141 may be either sharp or rounded. Specifically, the height of the first surface 131 is about 1.5 mm to 2.0 mm, the included angle θ1 between the first surface 131 and the top surface 11 is 90 degrees, and the included angle θ2 between the second surface 132 and the bottom surface 12 ranges from 105 degrees to 165 degrees. The included angle θ1 of 90 degrees between the first surface 131 and the top surface 11 can effectively align the two main body layers 10 and prevent horizontal displacement. The included angle θ2 between the second surface 132 and the bottom surface 12 ranges from 105 degrees to 165 degrees (for example, 135 degrees), so that it helps guide the relative sliding of the two main body layers 10 to the accurate engaged position, disperse the applied force, and avoid stress concentration.

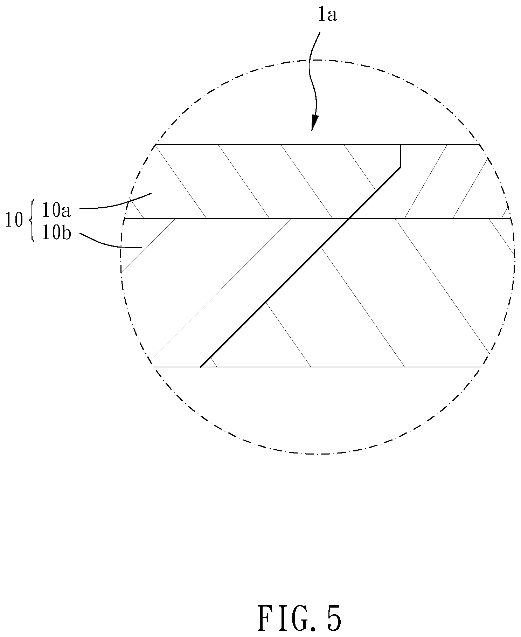

In an alternative embodiment, the modular pad 1 may further include a cladding layer 20 disposed on the main body layer 10, and the cladding layer 20 may be a fiber layer or a film layer. Depending on different functionalities and needs, the cladding layer 20 may be, but is not limited to, a water-absorbing layer, a waterproof layer or a non-slip structural layer. However, in another possible embodiment, the main body layer 10 of the modular pad may include only a first flexible layer 10a and a second flexible layer 10b, and the main body layer 10 may not include a cladding layer (as shown in Fig. 5).

Although particular embodiments of the invention have been described in detail for purposes of illustration, various modifications and enhancements may be made without departing from the spirit and scope of the invention. Accordingly, the invention is not to be limited except as by the appended claims.

## Claims

1. A modular pad (1) including:
two main body layers (10), each of the two main body layers (10) including a top surface (11), a bottom surface (12), a first side (13) straightly extending for an entire length between opposing distal edges of the main body layer (10), and a second side (14) which has a shape complementary to a shape of the first side (13) in parallel, the first side (13) including a first surface (131) and a second surface (132), the first surface (131) extending from the top surface (11) toward the bottom surface (12), the second surface (132) obliquely extending from the bottom surface (12) and being obliquely connected to the first surface (131), the first side (13) of one of the two main body layers (10) being engaged with the second side (14) of the other of the two main body layers (10) in parallel, the top surface (11)s of the two main body layers (10) being located at a same side of the modular pad (1);
wherein the first surface (131) and the second surface (132) of the first side (13) form a convex corner portion (133), the second side (14) includes a concave corner portion (141), and the convex corner portion (133) of one of the two main body layers (10) and the concave corner portion (141) of the other of the two main body layers (10) are fittingly engaged with each other.

2. The modular pad (1) of claim 1, wherein each of the two main body layers (10) further includes at least one flexible layer, and the at least one flexible layer is of a foamed structure made of rubber material, plastic material or silicone material.

3. The modular pad (1) of claim 2, wherein the at least one flexible layer includes a first flexible layer (10a) and a second flexible layer (10b), the first flexible layer (10a) includes the top surface (11), and the second flexible layer (10b) is adjacent to the first flexible layer (10a) and includes the bottom surface (12).

4. The modular pad (1) of claim 3, wherein the first flexible layer (10a) is a monolayer structure, and the hardness of the first flexible layer (10a) is greater than the hardness of the second flexible layer (10b).

5. The modular pad (1) of claim 4, wherein the second surface (132) extends from the bottom surface (12) and terminates within the first flexible layer (10a).

6. The modular pad (1) of claim 1, wherein each of the two main body layers (10) includes a plurality of flexible layers, and at least two of the plurality of flexible layers have different hardness.

7. The modular pad (1) of claim 1, wherein an included angle (θ1) between the first surface (131) and the top surface (11) is 90 degrees, and an included angle (θ2) between the second surface (132) and the bottom surface (12) ranges from 105 degrees to 165 degrees.

8. The modular pad (1) of claim 5, wherein the convex corner portion (133) and the concave corner portion (141) are adjacent to the top surface (11), and the convex corner portion (133) is located within the first flexible layer (10a) which is a monolayer structure.

9. The modular pad (1) of claim 1, further including a cladding layer (20) disposed on each of the two main body layers (10), wherein the cladding layer (20) is a fiber layer or a film layer.

10. The modular pad (1) of claim 1, wherein the first side (13) of one of the two main body layers (10) and the second side (14) of the other of the two main body layers (10) are simultaneously formed by cutting along a direction parallel to the first side (13).
